# EUROPEAN PATENT SPECIFICATION

(11) **EP 4 705 956 B1**
(45) Date of publication and mention of the grant of the patent: **02.12.2026**
(21) Application number: 24725072.3
(22) Date of filing: 24.04.2024
(51) Int. Cl.: G06N 20/00, G05B 13/02

(54) **DRIFT DETECTION FOR MACHINE LEARNING OPERATIONS**
DRIFTERKENNUNG FÜR MASCHINENLERNVORGÄNGE
DÉTECTION DE DÉRIVE POUR OPÉRATIONS D'APPRENTISSAGE AUTOMATIQUE

(30) Priority: 02.05.2023 DE 102023204025; 02.05.2023 EP 23171037
(43) Date of publication of application: 11.03.2026
(73) Proprietor: Siemens Aktiengesellschaft, 80333 München (DE)
(72) Inventor: KRÖGER, Luka, 76187 Karlsruhe (DE); SCHWULERA, Erik, 91056 Erlangen (DE)
(74) Representative: Siemens Patent Attorneys
(86) International application number: PCT/EP2024/061218
(87) International publication number: WO 2024/227670

(56) References cited:
- FIRAS BAYRAM ET AL: "From Concept Drift to Model Degradation: An Overview on Performance-Aware Drift Detectors", ARXIV.ORG, CORNELL UNIVERSITY LIBRARY, 201 OLIN LIBRARY CORNELL UNIVERSITY ITHACA, NY 14853, 21 March 2022 (2022-03-21), XP091181859
- ABDELWAHAB HAMMAM: "Evaluation of Drift Detection Techniques for Automated Machine Learning Pipelines", 31 January 2022 (2022-01-31), XP093081185, Retrieved from the Internet <URL:https://publica.fraunhofer.de/entities/publication/aed53061-b6d7-48d4-9cb5-d105b0b575dd/details> [retrieved on 20230912]

## Description

### TECHNICAL FIELD

Various examples of the disclosure generally pertain to maintaining and monitoring machine learning algorithms deployed in a manufacturing process. Various examples of the disclosure specifically pertain to a method for predicting drift of a machine learning algorithm deployed in a manufacturing process, e.g., a printed circuit board manufacturing process, a steel hardening process, or a process of instant coffee production.

### BACKGROUND

Machine Learning Operations (MLOps) is a core function of machine learning engineering, focused on streamlining the process of taking machine learning algorithms (or models) to production and then maintaining and monitoring them.

Incorporating MLOps is still a massive challenge within the industry as the landscape of proposed methods is not standardized at all in its current phase. While software engineering has developed a mature set of tools and practices, an equivalence for data and algorithms/models is still in its infancy of implementing the theoretically proposed methods. Therefore, each sub-area of MLOps requires individual attention in addressing and resolving currently open problems. One area of fluctuating state of study is monitoring of machine learning models or systems. Researchers are still figuring out the key metrics for monitoring and how to trigger reliable alarms to produce meaningful results for humans.

What makes monitoring so hard is the additional need for practices regarding data as well as the algorithm/model. Unlike traditional software systems, the behavior of a machine learning system is dictated by the way data is changing. In ML, the data is not stationary. Most production/manufacturing environments encounter rapidly changing, non-stationary data. This inevitably leads to the phenomena of shifting data distributions, also known as drift or concept drift.

Concept drift means that the statistical properties of the target variable, which the model is trying to predict, change over time in unforeseen ways. If the concept drift occurs, the induced pattern of past data may not be relevant to the new data, leading to poor predictions and decision outcomes, i.e., performance drift. The phenomenon of concept drift has been recognized as the root cause of decreased effectiveness (or performance drift) in many data-driven information systems such as data-driven early warning systems and data-driven decision support systems.

Existing drift detection algorithms, e.g., for data-driven early warning systems and/or data-driven decision support systems, are too sensitive for high-dimensional models and lead to a high number of wrongly detected drifts (or performance drift) associated with the models or machine learning algorithms, i.e., false calls or warnings.

### SUMMARY

Therefore, a need exists for advanced techniques for maintaining and monitoring machine learning algorithms deployed in a manufacturing process. Specifically, a need exists for precisely and reliably predicting drift of a machine learning algorithm deployed in a manufacturing process.

This need is met by the features of the independent claims. The features of the dependent claims define embodiments.

A computer-implemented method for predicting drift of a machine learning algorithm deployed in a manufacturing process is provided. The method comprises obtaining a first sequence and a second sequence of measurement data of at least one parameter associated with the manufacturing process. The first sequence of measurement data was used for training the machine learning algorithm and the second sequence of measurement data was not used for training the machine learning algorithm. The method further comprises splitting each of the first and second sequences of the measurement data into a respective subset of norm measurement data and a respective subset of outlier measurement data. The method also comprises determining a similarity measure between the subset of norm measurement data of the first sequence and the subset of norm measurement data of the second sequence and determining a further similarity measure between the subset of outlier measurement data of the first sequence and the subset of outlier measurement data of the second sequence. The method also comprises determining a prediction of the drift of the machine learning algorithm based on the similarity measure and the further similarity measure.

A computing device comprising a processor and a memory is provided. Upon loading and executing program code from the memory, the processor is configured to perform a method for predicting drift of a machine learning algorithm deployed in a manufacturing process. The method comprises obtaining a first sequence and a second sequence of measurement data of at least one parameter associated with the manufacturing process. The first sequence of measurement data was used for training the machine learning algorithm and the second sequence of measurement data was not used for training the machine learning algorithm. The method further comprises splitting each of the first and second sequences of the measurement data into a respective subset of norm measurement data and a respective subset of outlier measurement data. The method also comprises determining a similarity measure between the subset of norm measurement data of the first sequence and the subset of norm measurement data of the second sequence and determining a further similarity measure between the subset of outlier measurement data of the first sequence and the subset of outlier measurement data of the second sequence. The method also comprises determining a prediction of the drift of the machine learning algorithm based on the similarity measure and the further similarity measure.

A computer program product or a computer program or a computer-readable storage medium including program code is provided. The program code can be executed by at least one processor. Executing the program code causes the at least one processor to perform a method for predicting drift of a machine learning algorithm deployed in a manufacturing process. The method comprises obtaining a first sequence and a second sequence of measurement data of at least one parameter associated with the manufacturing process. The first sequence of measurement data was used for training the machine learning algorithm and the second sequence of measurement data was not used for training the machine learning algorithm. The method further comprises splitting each of the first and second sequences of the measurement data into a respective subset of norm measurement data and a respective subset of outlier measurement data. The method also comprises determining a similarity measure between the subset of norm measurement data of the first sequence and the subset of norm measurement data of the second sequence and determining a further similarity measure between the subset of outlier measurement data of the first sequence and the subset of outlier measurement data of the second sequence. The method also comprises determining a prediction of the drift of the machine learning algorithm based on the similarity measure and the further similarity measure.

FIRAS BAYRAM ET AL: "From Concept Drift to Model Degradation: An Overview on Performance-Aware Drift Detectors",ARXIV.ORG, CORNELL UNIVERSITY LIBRARY, 201 OLIN LIBRARY CORNELL UNIVERSITY ITHACA, NY 14853, 21 March 2022 provides a comprehensive overview of performance-aware (error-rate-based) concept drift detection in non-stationary machine learning systems. It addresses three research questions: (1) it consolidates the fragmented terminology of concept drift by grouping types according to their mathematical definitions (probabilistic source of change-e.g. real, virtual, covariate, prior-probability drift-and transition pattern-sudden, gradual, recurring, incremental); (2) it reviews and builds a hierarchical classification of performance-based drift detectors proposed 2011-2020, organised into three families-statistical process control (e.g. DDM, EDDM, RDDM, HDDM), windowing techniques (e.g. ADWIN, STEPD, MDDM), and ensemble learning (e.g. DWM, Learn++.NSE, AUE); and (3) it analyses how model performance is tracked and evaluated (metrics, base learners, drift types, ML problem scope). The paper concludes that classification tasks and error-rate monitoring dominate, no universal detector exists (No Free Lunch), and it identifies open challenges such as regression-scope drift, false-alarm reduction, and explainable deep-learning-based drift handling.

### BRIEF DESCRIPTION OF THE DRAWINGS

- FIG 1: schematically illustrates an exemplary system for a manufacturing process according to various examples.
- FIG 2: schematically illustrates a block diagram of a computing device according to various examples.
- FIG 3: is a flowchart of a method according to various examples.
- FIG 4: is a histogram of values of the capacity of a capacitor of an exemplary printed circuit board according to various examples.
- FIG 5: is a flowchart of an exemplary working flow for predicting a drift of a machine learning algorithm according to various examples.

### DETAILED DESCRIPTION OF THE DRAWINGS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various examples of the disclosure generally pertain to a method for predicting drift (or performance drift) of a machine learning algorithm deployed in a manufacturing process. A prediction of the drift of the machine learning algorithm is determined based on a similarity measure, e.g., associated with a norm value drift, and a further similarity measure, e.g., associated with a real error drift. The similarity measure is determined between a subset of norm measurement data of a first sequence of measurement data of at least one parameter associated with the manufacturing process and a subset of norm measurement data of a second sequence of the measurement data of the at least one parameter associated with the manufacturing process. The further similarity measure is determined between a subset of outlier measurement data of the first sequence of the measurement data of the at least one parameter and a subset of outlier measurement data of the second sequence of the measurement data of the at least one parameter. Each of the first and second sequences of the measurement data is split into a respective subset of norm measurement data and a respective subset of outlier measurement data. The first sequence of measurement data was used for training the machine learning algorithm and the second sequence of measurement data was not used for training the machine learning algorithm.

As a general rule, outliers may be data points that look dissimilar to the majority of samples from the dataset. In terms of distance, an outlier may lie at an irregular distance away from the norm. An outlier may be often referred to as an anomaly. The definition of an outlier event may be subjective and depends on the application and domain. Machine learning algorithms may be very sensitive to data points outside their distribution and can therefore lead to uncontrollable behavior in prediction. An outlier may indicate some variability in the measurements, but it may also indicate unintentional system errors. Incorporating outliers within the training may be reasonable, as it could lead to more robust models. However, in cases where the outlier may be actually a data error, the outlier may need to be removed. Some more problematic cases may be when obtaining outliers in real-time productive usage are never seen in training data. Whereas in offline data analysis a data scientist can extensively investigate the source of the outlier, an automated approach would be much more difficult.

The usage of outlier detection in production may be concerned with finding out-of-distribution samples. Outlier detection may be therefore key to flag anomalies, whose model (or machine learning algorithms) predictions cannot be trusted and can not be used in a production setting. The type of outlier detector for a specific application may depend on the modality and dimensionality of the availability of labeled normal and outlier data. An accumulation or repetition of outliers may indicate that dissimilar data points no longer arbitrarily occur. This might indicate that outliers move towards the presence of drift and that performances of machine learning algorithms or models may degrade, i.e., performance drift of the machine learning algorithms may occur.

In general, non-stationary data may lead a machine learning algorithm/model to be stale. The accuracy of the predictions of the machine learning algorithm/model may eventually decrease since the machine learning algorithm/model may fail to generalize to data not seen in training. The degradation of the machine learning algorithm/model after deployment is known as a drift of a machine learning algorithm/model. While the drift of a machine learning algorithm/model refers to the deterioration of the performance of a model, the underlying problem can be traced back to the phenomenon of distribution shift. A distribution shift occurs when the distribution of samples used for training the machine learning algorithm/model does not reflect the distribution of the samples received in production, i.e., in inference. More generally, this is known under the term drift. What is called drift can further be divided into data drift and concept drift. A data drift may describe that the distribution of the used data has changed. This can either mean a shift in the distribution of the features or the labels. Although the latter may result in a visible change in the data, it may not necessarily mean a deterioration in performance. A concept drift may refer to the phenomenon in which the statistical property of a target changes over time. In other words, it may entail a fundamental change in the relationship between the features and the labels occurred. The induced patterns of the past may not be relevant for new data, resulting in a severe performance decrease. Oftentimes, the entirety of the field drift may be interchangeably used with the term concept drift.

According to various examples, the drift of a machine learning algorithm/model may be due to shifts in the underlying data distribution or a complete change in the relationship of the concept being modeled. The occurrence of the drift may depend on many factors and can manifest itself in many shapes and forms. For example, a drift might just gradually change the data, when a sensor slowly wears out and becomes less accurate.

According to various example, a drift may be defined as follows:
*D*_{*t*₀} = {*d*₀, ... , *dₜ*} denotes a set of samples (or input data to a machine learning algorithm), within a time period *t*₀ = [0, *t*], where *dₜ* = (*Xᵢ*, *yᵢ*) represents an observation or measurement (or data point) at a time point *i. Xᵢ* is a feature vector and *yᵢ* is the label. The data *D*_{*t*₀} follows a joint distribution *P*(*X, y*)*t*₀*. D*_{*t*₀} is assumed to not have drifted. It can further be declared as the reference set *D_{ref},* with the respective distribution *P_{ref} = P*_{[0,*t*]}*.* The reference set may correspond to the last used training data. New unseen data *D*_{*t*₁}*,* with the time period *t*₁= [*t* + 1, *t* + *n*], or in short *D,* follows the distribution *P*(*X, y*)_{*t*₁}, or in short P. A drift between time period *t*₀ and time period *t*₁ may be defined as $P {\left(X, y\right)}_{{t}_{0}} \neq P {\left(X, y\right)}_{{t}_{1}}$ or alternatively ${P}_{ref} \neq P$

In general, the joint probability is difficult to observe. Since a joint distribution can be decomposed using Bayes Theorem, a drift can be further investigated within its subcomponents. $P \left(X, y\right) = P \left(\left.y\right|X\right) ∗ P \left(X\right) = P \left(\left.X\right|Y\right) ∗ P \left(Y\right) = p \left(\left.X\right|y\right) ∗ \frac{P \left(y\right)}{p \left(X\right)} ∗ P \left(X\right)$

Mathematically, most concept drifts may manifest in a changed *P*(*X*), except in the case, when *P*(*X*|*y*) changes and *P(y)* is invariant. This means the following three cases would be relevant in observing drift.
- ***P(X)*** changes, ***P*(*y*|*X*)** remains: A non-harmful covariate drift can be observed with changes in *P(X).* The significance of change may indicate the malignancy of the drift.
- *P*(*X*) remains, ***P*(*y*|*X*)** changes: A concept drift without a change in the input, indicates a fundamental change in the relationship between features and labels. This can be due to the changes in a hidden context.
- Both ***P*(*X*)** and ***P*(*y*|*X*)** changes: Both covariate drift and concept drift may appear simultaneously. A concept drift appears because the input data drifted significantly, and the decision boundary of the machine learning algorithm does not hold and the statistical property changed.

According to various examples, the manufacturing process may comprise a printed circuit board manufacturing process, and the first and second sequences may comprise measurement data of at least one parameter associated with at least one component of an instance of the printed circuit board. The manufacturing process may also comprise a steel hardening process or a process of instant coffee production.

For example, in the printed circuit board manufacturing process, the at least one component may comprise at least one of a capacitor, a resistor, a transistor, and an inductor, and the at least one parameter may comprise at least one of a voltage, a current, a capacity, a resistance, and an inductance.

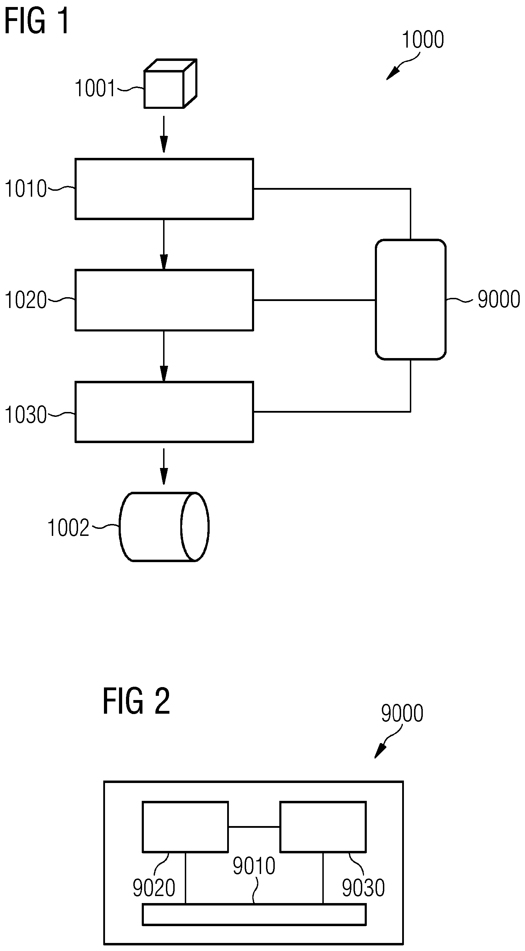

An exemplary system 1000 for a manufacturing process is illustrated in FIG 1. The system 1000 includes multiple machines 1010, 1020, and 1030 for transforming raw materials 1001 into finished goods 1002.

These machines 1010, 1020, and 1030 may be controlled by a computing device 9000 for performing the manufacturing process. Each of the machines 1010, 1020, and 1030 may comprise one or more sensors (not shown in FIG 1) for obtaining measurements of parameters associated with the manufacturing process, and the machines 1010, 1020, and 1030 may be respectively or collectively controlled based on the measurements of parameters associated with the manufacturing process. For example, the computing device 9000 may execute one or more software for processing the measurements of parameters associated with the manufacturing process and generate control information for each of the machines 1010, 1020, and 1030.

Alternatively or additionally, the system 1000 may comprise a database for storing the measurements of parameters associated with the manufacturing process and/or the control information generated for each of the machines 1010, 1020, and 1030.

According to various examples, the computing device 9000 may communicate with each of the machines 1010, 1020, and 1030 via wireless communication systems, e.g., Bluetooth, Wi-Fi, Global System for Mobile Communications (GSM), Universal Mobile Telecommunications System (UMTS), Long-Term Evolution (LTE) or 5G New Radio (NR). Any wired communication technologies can also be used in the system 1000.

According to various examples, the machines 1010, 1020, and 1030 may be controlled by a control system comprising multiple computing devices such as the computing device 9000. Each of the machines 1010, 1020, and 1030 may be respectively controlled by an individual computing device.

As a general rule, various kinds and types of manufacturing processes can be subject to the techniques disclosed herein, e.g., a steel hardening process, an instant coffee production process, a printed circuit board fabrication process.

FIG 2 is a block diagram of a computing device 9000 according to various examples. The computing device 9000 may comprise a processor 9020, a memory 9030, and an input/output interface 9010.

According to various examples, it is possible to output control data/information via the input/output interface 9010 to thereby control the machines 1010, 1020, and 1030 of a system for a manufacturing process such as the system 1000.

The input/output interface 9010 may include a human machine interface via which a user interface can be provided to a user, e.g., an engineer. The user interface could be, e.g., a graphical user interface such as a web-based user interface.

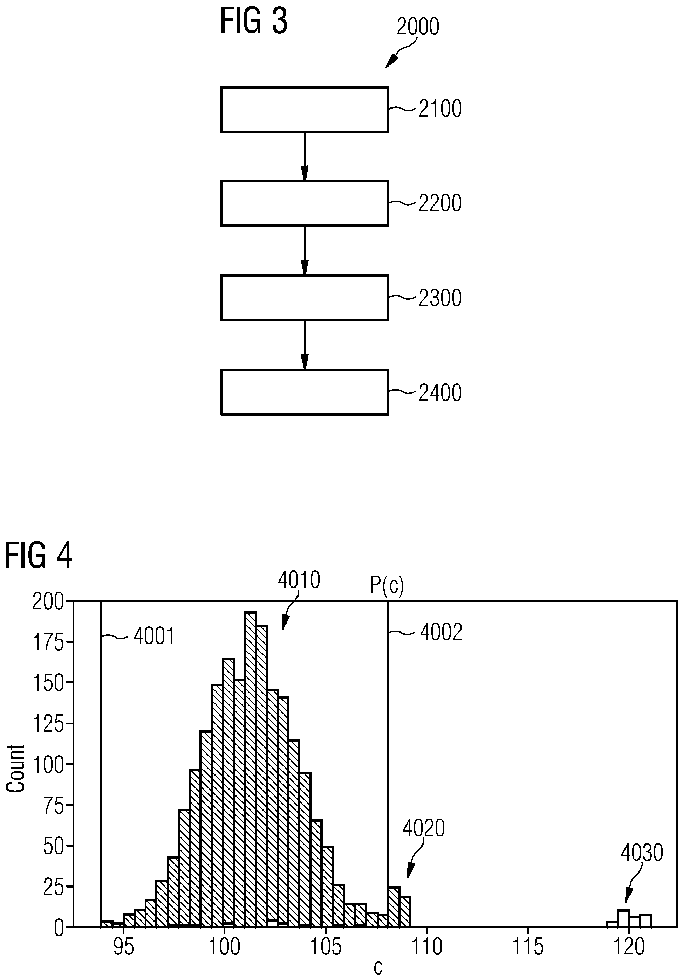

The processor 9020 is configured to load program code from the memory 9030 and execute the program code. Upon executing the program code, the processor 9020 performs techniques as disclosed herein. For instance, the processor 9020 can perform techniques as disclosed in connection with FIG 3.

FIG 3 is a flowchart of a method 2000 according to various examples. The method 2000 of FIG 3 pertains to predicting drift of a machine learning algorithm deployed in a manufacturing process. The manufacturing process may be performed by one or more machines, e.g., the machines 1010, 1020, and 1030 of the system 1000 of FIG 1. For example, the method 2000 may be executed by a computing device such as the computing device 9000 of FIG 1 or 2. The method 2000 may be executed by the processor 9020 upon loading program code from the memory 9030 and upon executing the program code. Details of the method 2000 are described in the following.

At block 2100: obtaining a first sequence and a second sequence of measurement data of at least one parameter associated with the manufacturing process. The first sequence of measurement data was used for training the machine learning algorithm and the second sequence of measurement data was not used for training the machine learning algorithm.

According to various examples, the manufacturing process may comprise a printed circuit board manufacturing process, and the first and second sequences may comprise measurement data of at least one parameter associated with at least one component of an instance of the printed circuit board.

For example, in the printed circuit board manufacturing process, the at least one component may comprise at least one of a capacitor, a resistor, a transistor, and an inductor, and the at least one parameter may comprise at least one of a voltage, a current, a capacity, a resistance, and an inductance.

According to various examples, the first sequence and the second sequence of measurement data of at least one parameter may be obtained during an In-Circuit Test.

In general, the in-circuit test is an example of white box testing where an electrical probe tests a populated printed circuit board, checking for shorts, opens, resistance, capacitance, and other basic quantities which will show whether the assembly was correctly fabricated. It may be performed with a "bed of nails" test fixture and specialist test equipment, or with a fixtureless in-circuit test setup.

Alternatively or additionally, the first sequence and the second sequence of measurement data of at least one parameter may be obtained from a database or one or more sensors associated with one or more machines for performing the manufacturing process. For example, the first sequence and the second sequence of measurement data of at least one parameter may be measurements of one or more sensors of the machines 1010, 1020, and 1030 of FIG 1.

According to various examples, the first sequence and the second sequence of measurement data of the at least one parameter may correspond to *D*_{*t*₀} (or *D_{ref}*) and *D*_{*t*₁}*,* respectively.

Preferably, during a training process of the machine learning algorithm, the first sequence of measurement data of the at least one parameter, i.e., training data, may be obtained from a database. After deploying the trained machine learning algorithm, i.e., during an inference procedure, the second sequence of measurement data of the at least one parameter may be obtained from one or more sensors associated with one or more machines for performing the manufacturing process, e.g., in real-time. As such, the drift of the machine learning algorithm can be predicted or detected in real-time, and thereby the one or more machines for performing the manufacturing process can be controlled in real-time.

According to various examples, the first sequence of the measurement data of the at least one parameter may be obtained, using a reference window, from both the training and validation data used for training the machine learning algorithm deployed. The reference window may have a fixed size. The second sequence of the measurement data of the at least one parameter may be obtained, using a detection window, from incoming input data acquired after deploying the machine learning algorithm. The detection window may be a sliding window of differing sizes. In a real-time processing scenario, the second sequence of the measurement data of the at least one parameter may be accumulated and stored in a memory, e.g., the memory 9030 of the computing device 9000 of FIG 1 or 2, until a size of the detection window is reached.

According to various examples, instead of selecting the detection window with a fixed size, a fixed time frame may be used. For example, in the printed circuit board manufacturing process, the amount of tests running through an assembly line may differ in daily operation. Time frames may have a more influencing part than the absolute succession of measurements. That is, a series of sequentially executed tests may exhibit similar behavior and a new concept may be more likely to be found within set time frames. Therefore, the size of the detection window may vary within a time frame. The size can be conveniently set to a time frame, e.g. hourly, daily, weekly, or monthly. The selection of the time frame may depend on the rate of tests in the assembly line. The window may be large enough to capture enough samples of one or more minority classes. Windows that are too small can also lead to drift detection that is too sensitive.

At block 2200: splitting each of the first and second sequences of the measurement data into a respective subset of norm measurement data and a respective subset of outlier measurement data.

According to various examples, various available methods of outlier detection can be used herein. For example, model-based methods may be used, which are commonly used for identification assume that the data are from a normal distribution, and identify observations which are deemed "unlikely" based on mean and standard deviation.

Alternatively or additionally, Peirce's criterion, Tukey's fences, In anomaly detection, Z-scores, and/or modified Thompson Tau test may be used for splitting/detecting outlier measurement data. Further, cluster-based algorithms may be used for splitting/detecting outlier measurement data, e.g., Density-based spatial clustering of applications with noise (DBSCAN).

FIG 4 is a histogram of values of the capacity of a capacitor of an exemplary printed circuit board. As shown in FIG 4, the measured capacity values mainly comprise three value areas, i.e., a first area 4010 between the vertical lines 4001 and 4002, a second area 4020 on the right of and close to the vertical line 4002, and a third area 4030 on the right of and far from the vertical line 4002, which create their own distribution clusters. The distributions within these may be imbalanced. A majority distribution contains most of the samples, i.e., the first area 4010, and two minority distributions form small portions of samples, i.e., the second and third areas 4020 and 4030.

As shown in FIG 4, it can be depicted that the minority distribution associated with the third area 4030 is far away from the majority distribution associated with the first area 4010. Therefore, the idea is to split the measurement data within the first and second sequences into a respective subset of norm measurement data and a respective subset of outlier measurement data based on the distribution clusters to aim for a more robust drift detection. Since the measurements of real errors may be to be expected in extreme values, the real errors are explained by outliers, e.g., the values within the third area 4030.

According to various examples, the vertical lines 4001 and 4002 may respectively represent thresholds, i.e., minimum and maximum values, of the capacity of a capacitor defined for an In-circuit test. The thresholds can be utilized to classify the capacity values into a norm value area, i.e., the first area 4010, and extreme values, i.e., the third area 4030. Values close to the limits, i.e., the second area 4020, may be accounted as norm values. This way a respective split of the first and second sequences of the measurement data can be achieved.

At block 2300: determining a similarity measure between the subset of norm measurement data of the first sequence and the subset of norm measurement data of the second sequence and determining a further similarity measure between the subset of outlier measurement data of the first sequence and the subset of outlier measurement data of the second sequence.

In general, a similarity or dissimilarity measure may be used to quantify the (dis)similarity between the selected data, i.e., the subset of norm measurement data of the first sequence and the subset of norm measurement data of the second sequence and/or the subset of outlier measurement data of the first sequence and the subset of outlier measurement data of the second sequence. Furthermore, similarity or dissimilarity measures may indicate a magnitude or severity of a drift. Different test statistics may be determined based on different methods and be used to represent the similarity or dissimilarity measure.

For example, performance-based drift detection methods may be used herein. A performance-based drift detection may compare a performance metric of the model to new and historical data. A drift may be detected when a significant decrease in the metric is observed. The performance-based drift detection methods may comprise Drift detection method (DDM) (See: Gama, Joao, et al. "Learning with drift detection." Advances in Artificial Intelligence-SBIA 2004: 17th Brazilian Symposium on Artificial Intelligence, Sao Luis, Maranhao, Brazil, September 29-Ocotber 1, 2004. Proceedings 17. Springer Berlin Hei-delberg, 2004.), modified DDM such as Early DDM (See: Baena-Garcia, Manuel, et al. "Early drift detection method." Fourth international workshop on knowledge discovery from data streams. Vol. 6. 2006.) and Hoeffding DDM. Further, the concept drift detection methods as disclosed in a non-patent literature - Gonçalves Jr, Paulo M., et al. "A comparative study on concept drift detectors." Expert Systems with Applications 41.18 (2014): 8144-8156. - may be used herein.

Alternatively or additionally, distribution-based drift detection methods may be used. Distribution-based methods may use distance measures to estimate the similarity of data distributions, i.e., the subset of norm measurement data of the first sequence and the subset of norm measurement data of the second sequence and/or the subset of outlier measurement data of the first sequence and the subset of outlier measurement data of the second sequence. These approaches tackle the problem from the root cause: distribution shift. They may ensure that the data is still relevant by constantly checking the population stability over time. A drift is detected when the two distributions are significantly distant from each other. Such distribution-based drift detection methods may comprise Kolmogorov-Smirnov Test, Kernel Maximum Mean Discrepancy, and/or Wasserstein distance (or Earth-Mover Distance) .

In general, the similarity and the further similarity may be respectively determined by using either performance-based drift detection methods or distribution-based drift detection methods.

At block 2400: determining a prediction of the drift of the machine learning algorithm based on the similarity measure and the further similarity measure.

According to various examples, the prediction of the drift of the machine learning algorithm may be a probability of a presence of the drift, e.g., a value from 0 to 1.

According to various examples, if either the similarity measure or the further similarity measure has a value less than a pre-defined threshold, the drift of the machine learning algorithm may be determined to be present.

Alternatively or additionally, a hypothesis test or a p-value may be used to evaluate the statistical significance of the similarity measure and/or the further similarity measure. Hypothesis testing in the context of drift may imply defining the null hypothesis that the underlying distributions are equal, i.e., *P*(*X, y*)*_{ref}* = *P*(*X, y*). In other words, this means no drift is currently observed. When the observed p-value is smaller than a specified threshold, the test may be said to be statistically significant, resulting in the null hypothesis being rejected.

According to various examples, various available hypothesis tests may be used herein, e.g., estimating the distribution of the similarity measure and/or the further similarity measure, boot-strapping, the permutation test, and/or Hoeffding's inequality-based bound identification.

According to various examples, the method 2000 may further comprise reducing a dimension of each of the subsets of norm measurement data of the first and the second sequence and the subsets of outlier measurement data of the first sequence and the second sequence.

According to this disclosure, after obtaining the first sequence and the second sequence of the measurement data of the at least one parameter associated with the manufacturing process, dimensionality reduction techniques may be applied to the first sequence and/or the second sequence of the measurement data, which can further facilitate predicting drift of the machine learning algorithm.

Alternatively or additionally, dimensionality reduction techniques may be applied to each of the subsets of norm measurement data of the first and the second sequence and the subsets of outlier measurement data of the first sequence and the second sequence.

For example, a feature reduction can be utilized to decrease the size of relevant features. Within the machine learning algorithm training, certain features may be dropped, when the variance is low. As such, features with negligible to zero variance may be dropped, as they most likely have not drifted.

Furthermore, various methods for dimensionality reduction can be utilized to bring the data into lower dimensions while keeping meaningful representation. Such methods may comprise those disclosed in a non-patent literature - Rabanser, Stephan, Stephan Günnemann, and Zachary Lipton. "Failing loudly: An empirical study of methods for detecting dataset shift." Advances in Neural Information Processing Systems 32 (2019).

Alternatively or additionally, Principal component analysis may be used to facilitate low computational effort. Another approach for reducing dimensions may be to use tools for feature importance. They indicate which features are most relevant for the output of the model.

According to various examples, the method 2000 may further comprise comparing each instance of the second sequence of measurement data with one or more pre-defined thresholds, and determining the drift of the machine learning algorithm is present if at least one instance of the second sequence of measurement data exceeds at least one of the one or more pre-defined thresholds.

For example, the one or more pre-defined thresholds may comprise a minimum value and/or a maximum value, e.g., the respective values indicated by the two vertical lines 4001 and 4002 of FIG 4.

Generally, a machine learning algorithm may fail to generalize outside training data. Therefore, a computationally cheap and efficient method to quickly assess out-of-training instances may be required, e.g., a data schema validation. The data schema validation may be used to catch never seen data. When the data schema is violated, e.g., the maximum value is exceeded, an alert may be sent. To avoid unexpected or overconfident predictions on the detected out-of-training instances, the prediction of the model is stopped or rejected. This way, the safeguarding mechanism against unwanted behavior for the machine learning algorithm in production is enhanced. A more enhanced and safer operation can be ensured.

For example, when determining the drift of the machine leaning algorithm is present, e.g., using the data schema validation, the method 2000 may further comprise stopping the machine learning algorithm, and training the machine learning algorithm further based on the second sequence of measurement data.

According to various examples, the prediction of the drift of the machine learning algorithm may comprise a norm value drift prediction and/or a real error drift prediction, and said determining of the prediction of the drift of the machine learning algorithm may comprise determining the norm value drift prediction based on the similarity measure and determining the real error drift prediction based on the further similarity measure.

According to this disclosure, the norm value drift may refer to a shift in the dispersion of the norm area of measurements, e.g., the first area 4010 of FIG 4, and the real error drift may refer to the occurrence of new error patterns or areas, e.g., a new cluster of capacity values occurring close to the value 115 of FIG 4.

According to various examples, the norm value drift may be detected/determined by using distribution-based drift methods. However, the detection using distribution-based drift methods may be sensitive, resulting in false alarms. Since a too-frequent detection of the norm value drift may be not desired, distance-based hypothesis tests can be used to adjust the sensitivity.

According to various examples, the real error drift may be detected/determined by using distribution-based drift methods.

According to various examples, the method 2000 may further comprise validating the prediction of the drift of the machine learning algorithm using a performance-based drift detection method.

According to this disclosure, the method 2000 may rely on unsupervised data, i.e., without any labels. It is possible to further facilitate predicting drift of a machine learning algorithm by validating the prediction of the drift of the machine learning algorithm using a performance-based drift detection method.

In general, when a drift of a machine learning algorithm is predicted or detected, drift adaptation techniques may be required to improve the performance of the machine learning algorithm on new data. For example, depending on the types of drifts, e.g., a norm value drift and/or a real error drift, different adaption methods can be used.

According to various examples, if a violation of the data schema is detected, the first reaction may be to stop the machine learning algorithm from making a prediction. Since new data is available, it may be desired to include the never seen data in the next training. However, it may be not reasonable to directly start a new training for each schema detection, as potentially not enough training instances are available. An accumulation of multiple data schema violations may trigger retraining. Once new labeled data is available, the detected data points may be added to the training data. This ensures that never seen data is used and can be reacted to in future versions of the machine learning algorithm.

Generally, when a norm value drift is detected and validated, the default option may be to trigger retraining. The reasoning is that drift in norm value measurements may in most cases have an impact on the false positive rate, meaning a higher degree of pseudo errors will be detected. Although the performance of the machine learning algorithm may be decreasing due to false positives, the overall manufacturing process may be not in danger. Dynamic window sizes for retraining could be used to improve the performance of the machine learning algorithm.

According to various examples, the method 2000 may further comprise retraining the machine learning algorithm based on the second sequences of the measurement data if the norm value drift prediction indicates the drift of the machine learning algorithm present.

On the other hand, when a real error drift is detected and validated, several options may be available. New error patterns represent new concepts. These concepts may be learned through retraining. Since real errors are under-represented, keeping as many errors as possible may allow for improving the overall performance of the machine learning algorithms. Furthermore, oversampling of the new patterns may be an option. If not enough samples of the new error pattern are available, or if the error pattern is not properly learnable by retraining, remodeling may be considered.

Alternatively or additionally, the method 2000 may further comprise remodeling the machine learning algorithm if the real error drift prediction indicates the drift of the machine learning algorithm present.

The method 2000 discloses herein, can facilitate managing drift of machine learning algorithms deployed in a manufacturing process. The method 2000 may be integrated into a system for MLOps. By using the method 2000, a first and second sequences of the measurement data are respectively split into a respective subset of norm measurement data and a respective subset of outlier measurement data and a drift associated with norm measurement data and a further drift associated with outlier measurement data can be respectively determined. As such, two types of drift can be determined in an unsupervised manner and thereby a drift of a machine learning algorithm deployed in a manufacturing process can be precisely and reliably predicted.

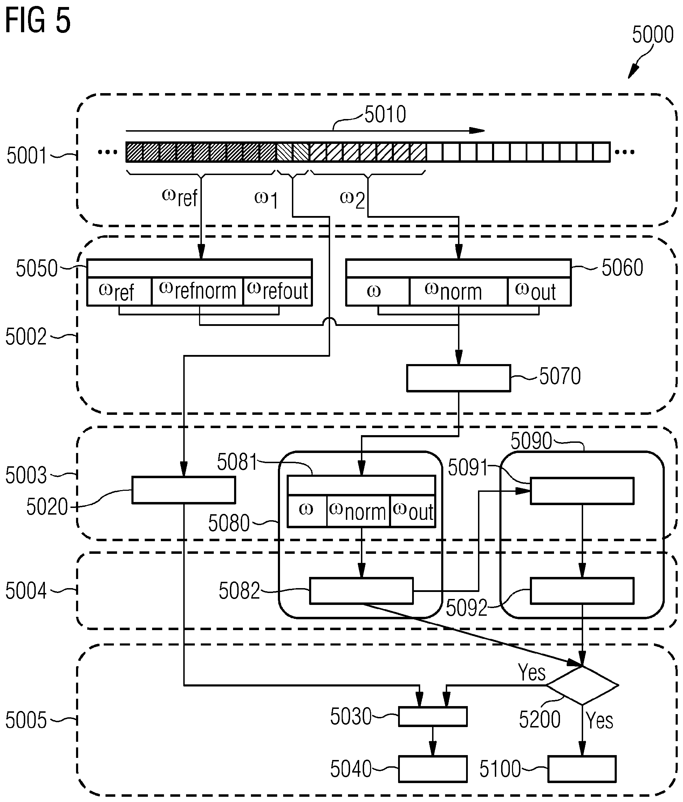

FIG 5 is a flowchart of an exemplary working flow 5000 for predicting a drift of a machine learning algorithm according to various examples. The working flow 5000 may comprise five steps, i.e., data accumulation 5001, data modelling 5002, test statistics 5003, hypothesis test 5004, and adaptation 5005.

Step 5001 may correspond to block 2100 of the method 2000 of FIG 3.

The deployed machine learning algorithm may receive data sequentially in the form of a data stream 5010. This data may comprise measurements taken by respective tests within a printed circuit board assembly line. E.g., the measurements from a In-Circuit Test may be used. The reference window *w_{ref}* may be fixed. For the detection window, two sliding windows *w*₁ and *w*₂ are used. Each window may capture the incoming input data.

According to various examples, the reference window *w_{ref}* is used for obtained the first sequence of measurement data of at least one parameter, and the second sliding window *w*₂ is used for obtained the second sequence of the measurement data.

The first detection window *w*₁ may use a small sliding window of fixed size, e.g., 1, for the detection via the data schema validation 5020. On each arriving instance a detection may be executed.

According to various examples, if a violation of the data schema is detected, the first reaction may be to stop the machine learning algorithm from making a prediction. Since new data is available, it may be desired to include the never seen data in the next training. However, it may be not reasonable to directly start a new training for each schema detection, as potentially not enough training instances are available. An accumulation of multiple data schema violations 5030 may be performed and thereby trigger retraining 5040. Once new labeled data is available, the detected data points may be added to the training data. This ensures that never seen data is used and can be reacted to in future versions of the machine learning algorithm.

Step 5002 may correspond to block 2200 of the method 2000 of FIG 3. The first sequence of the measurement data is split, at 5050, into a subset of norm measurement data and a subset of outlier measurement data. The second sequence of the measurement data is split, at 5060, into a subset of norm measurement data and a subset of outlier measurement data.

Additionally or optionally, at 5070, dimensionality reduction techniques may be applied to each of the subsets of norm measurement data of the first and the second sequence and the subsets of outlier measurement data of the first sequence and the second sequence.

Steps 5003 and 5004 together correspond to a hierarchical drift detection. The hierarchical drift detection may follow a similar idea to the following two non-patent literatures:
- Yu, Shujian, Xiaoyang Wang, and José C. Principe. "Request-and-reverify: Hierarchical hypothesis testing for concept drift detection with expensive labels." arXiv preprint arXiv:1806.10131 (2018), and
- Yu, Shujian, et al. "Concept drift detection and adaptation with hierarchical hypothesis testing." Journal of the Franklin Institute 356.5 (2019): 3187-3215.

The underlying idea of hierarchical multiple hypothesis testing may be to validate a found drift by applying different drift detection methods in subsequent layers 5080 and 5090. Thereby, a detection layer 5080 uses a drift method with low drift delay to detect drift quickly with the trade-off of having a high false positive rate. Once the detection layer 5080 identifies a potential drift, the validation layer 5090 is activated to confirm or deny the validity of the drift. To make this decision the validation layer 5090 may use a method of high accuracy.

According various examples, the detection layer 5080 may receive the split window batches as input. Due to the unavailability of immediate true labels, the detection layer may rely on the input data. The objective is to detect both concept drift caused by norm value drift and true error drift. The detection layer may be parallelized to run for each of the split windows *wₙₒᵣₘ* and *wₒᵤₜ.* Any distribution-based method can be used.

According to various examples, the detection layer 5080 may comprise a drift detection sub-layer 5081 for detecting both concept drift caused by norm value drift and true error drift. Optionally or additionally, the detection layer 5080 may comprise a hypothesis test sub-layer 5082 for validating the detection results of the drift detection sub-layer 5081. The drift detection sub-layer 5081 may execute any one of distribution-based drift detection methods.

Optionally or additionally, the validation layer 5090 may comprise a drift validity assessment sub-layer 5091 for assessing the validity of the drift detected by the detection layer 5080. Optionally, the validation layer 5090 may further comprise a hypothesis test sub-layer 5092 for validating the assessment results of the drift validity assessment sub-layer 5091. The drift validity assessment sub-layer 5091 may execute any one of performance-based drift detection methods.

In general, when the detection layer 5080 identifies a drift, the validation layer 5090 is activated and true labels are requested.

Since the detection layer 5080 relies on unsupervised data, it may be difficult to see if the drift has an effect on the performance of the model. Therefore, the validation layer 5090 makes use of the true labels to show if the decision boundary of the machine learning algorithm is affected. Supervised performance-based methods can be used. Any performance-based method can also be used.

At step 5005, when a drift of a machine learning algorithm is predicted or detected at 5200, drift adaptation techniques may be required to improve the performance of the machine learning algorithm on new data. For example, depending on the types of drifts, e.g., a norm value drift and/or a real error drift, different adaption methods, e.g., retraining 5040 the machine learning algorithm or remodeling 5100 the machine learning algorithm, can be used.

The techniques disclosed herein, e.g., the method 2000 and the working flow 5000, can facilitate managing drift of machine learning algorithms deployed in a manufacturing process. The techniques may be integrated into a system for MLOps. By using the disclosed techniques, a first and second sequences of the measurement data are respectively split into a respective subset of norm measurement data and a respective subset of outlier measurement data and a drift associated with norm measurement data and a further drift associated with outlier measurement data can be respectively determined. As such, two types of drift can be determined in an unsupervised manner and thereby a drift of a machine learning algorithm deployed in a manufacturing process can be precisely and reliably predicted.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

## Claims

1. A computer-implemented method (2000) for predicting drift of a machine learning algorithm deployed in a manufacturing process, the method (2000) comprising:
- obtaining (2100) a first sequence and a second sequence of measurement data of at least one parameter associated with the manufacturing process, wherein the first sequence of measurement data was used for training the machine learning algorithm and the second sequence of measurement data was not used for training the machine learning algorithm;
- splitting (2200) each of the first and second sequences of the measurement data into a respective subset of norm measurement data and a respective subset of outlier measurement data;
- determining (2300) a similarity measure between the subset of norm measurement data of the first sequence and the subset of norm measurement data of the second sequence and determining a further similarity measure between the subset of outlier measurement data of the first sequence and the subset of outlier measurement data of the second sequence; and
- determining (2400) a prediction of the drift of the machine learning algorithm based on the similarity measure and the further similarity measure;
- reducing a dimension of each of the subsets of norm measurement data of the first and the second sequence and the subsets of outlier measurement data of the first sequence and the second sequence;
- wherein the manufacturing process comprises a printed circuit board manufacturing process, and the first and second sequences comprise measurement data of at least one parameter associated with at least one component of an instance of the printed circuit board,
- wherein, when a drift of a machine learning algorithm is predicted or detected, drift adaptation techniques are used to improve the performance of the machine learning algorithm on new data, wherein e. g. as adaption method retraining the machine learning algorithm or remodeling the machine learning algorithm is used.

2. The computer-implemented method (2000) of claim 1, wherein the at least one component comprises at least one of a capacitor, a resistor, a transistor, and an inductor, and the at least one parameter comprises at least one of a voltage, a current, a capacity, a resistance, and an inductance.

3. The computer-implemented method (2000) of any one of the preceding claims, the method further comprising:
- comparing each instance of the second sequence of measurement data with one or more pre-defined thresholds;
- determining the drift of the machine learning algorithm is present if at least one instance of the second sequence of measurement data exceeds at least one of the one or more pre-defined thresholds.

4. The computer-implemented method (2000) of claim 3, further comprising:
- stopping the machine learning algorithm; and,
- training the machine learning algorithm further based on the second sequence of measurement data.

5. The computer-implemented method (2000) of any one of the preceding claims,
wherein the prediction of the drift of the machine learning algorithm comprises a norm value drift prediction and/or a real error drift prediction, and
said determining of the prediction of the drift of the machine learning algorithm comprises:
- determining the norm value drift prediction based on the similarity measure; and
- determining the real error drift prediction based on the further similarity measure.

6. The computer-implemented method (2000) of any one of the preceding claims, further comprising:
- validating the prediction of the drift of the machine learning algorithm using a performance-based drift detection method.

7. The computer-implemented method (2000) of claim 5 or 6, further comprising:
- retraining the machine learning algorithm based on the second sequences of the measurement data if the norm value drift prediction indicates the drift of the machine learning algorithm present.

8. The computer-implemented method (2000) of any one of claims 5 to 7, further comprising:
- remodeling the machine learning algorithm if the real error drift prediction indicates the drift of the machine learning algorithm present.

9. A computing device (9000), the device (9000) comprising a processor (9020) and a memory (9030), wherein upon loading and executing program code from the memory (9030), the processor (9020) is configured to perform the method (2000) of any one of the preceding claims.

10. A computer program product or a computer program or a computer-readable storage medium includes program code being executed by at least one processor (9020), wherein upon executing the program code, the at least one processor (9020) is configured to perform the method (2000) according to any one of claims 1 to 8.

## Patentansprüche

1. Computerimplementiertes Verfahren (2000) zur Vorhersage einer Drift eines in einem Fertigungsprozess eingesetzten maschinellen Lernalgorithmus, wobei das Verfahren (2000) umfasst:
- Erhalten (2100) einer ersten Sequenz und einer zweiten Sequenz von Messdaten mindestens eines dem Herstellungsprozess zugeordneten Parameters, wobei die erste Sequenz von Messdaten zum Trainieren des maschinellen Lernalgorithmus verwendet wurde und die zweite Sequenz von Messdaten nicht zum Trainieren des maschinellen Lernalgorithmus verwendet wurde;
- Aufteilen (2200) jeder der ersten und der zweiten Sequenz der Messdaten in eine entsprechende Teilmenge von Normmessdaten und eine entsprechende Teilmenge von Ausreißermessdaten;
- Bestimmen (2300) eines Ähnlichkeitsmaßes zwischen der Teilmenge von Normmessdaten der ersten Sequenz und der Teilmenge von Normmessdaten der zweiten Sequenz und Bestimmen eines weiteren Ähnlichkeitsmaßes zwischen der Teilmenge von Ausreißermessdaten der ersten Sequenz und der Teilmenge von Ausreißermessdaten der zweiten Sequenz; und
- Bestimmen (2400) einer Vorhersage der Drift des maschinellen Lernalgorithmus basierend auf dem Ähnlichkeitsmaß und dem weiteren Ähnlichkeitsmaß;
- Reduzieren einer Dimension jeder der Teilmengen von Normmessdaten der ersten und der zweiten Sequenz und der Teilmengen von Ausreißermessdaten der ersten Sequenz und der zweiten Sequenz;
- wobei der Herstellungsprozess einen Herstellungsprozess für eine Leiterplatte umfasst und die erste und die zweite Sequenz Messdaten von mindestens einem Parameter umfassen, der mindestens einer Komponente einer Instanz der Leiterplatte zugeordnet ist,
- wobei, wenn eine Drift eines maschinellen Lernalgorithmus vorhergesagt oder detektiert wird, Driftanpassungstechniken verwendet werden, um die Leistungsfähigkeit des maschinellen Lernalgorithmus an neuen Daten zu verbessern, wobei z. B. als Anpassungsverfahren ein erneutes Trainieren des maschinellen Lernalgorithmus oder ein Remodellieren des maschinellen Lernalgorithmus verwendet wird.

2. Computerimplementiertes Verfahren (2000) nach Anspruch 1, wobei die mindestens eine Komponente mindestens eines von einem Kondensator, einem Widerstand, einem Transistor und einer Induktivität umfasst und der mindestens eine Parameter mindestens eines von einer Spannung, einem Strom, einer Kapazität, einem Widerstand und einer Induktivität umfasst.

3. Computerimplementiertes Verfahren (2000) nach einem der vorhergehenden Ansprüche, wobei das Verfahren ferner umfasst:
- Vergleichen jeder Instanz der zweiten Sequenz von Messdaten mit einem oder mehreren vordefinierten Schwellenwerten;
- wobei das Bestimmen der Drift des maschinellen Lernalgorithmus vorliegt, wenn mindestens eine Instanz der zweiten Sequenz von Messdaten mindestens einen der einen oder mehreren vordefinierten Schwellenwerte überschreitet.

4. Computerimplementiertes Verfahren (2000) nach Anspruch 3, ferner umfassend:
- Stoppen des maschinellen Lernalgorithmus und
- Trainieren des maschinellen Lernalgorithmus ferner basierend auf der zweiten Sequenz von Messdaten.

5. Computerimplementiertes Verfahren (2000) nach einem der vorhergehenden Ansprüche,
wobei die Vorhersage der Drift des maschinellen Lernalgorithmus eine Normwertdriftvorhersage und/oder eine tatsächliche Fehlerdriftvorhersage umfasst und
das Bestimmen der Vorhersage der Drift des maschinellen Lernalgorithmus umfasst:
- Bestimmen der Normwertdriftvorhersage basierend auf dem Ähnlichkeitsmaß und
- Bestimmen der tatsächlichen Fehlerdriftvorhersage basierend auf dem weiteren Ähnlichkeitsmaß.

6. Computerimplementiertes Verfahren (2000) nach einem der vorhergehenden Ansprüche, ferner umfassend:
- Validieren der Vorhersage der Drift des maschinellen Lernalgorithmus unter Verwendung eines leistungsbasierten Drifterkennungsverfahrens.

7. Computerimplementiertes Verfahren (2000) nach Anspruch 5 oder 6, ferner umfassend:
- erneutes Trainieren des maschinellen Lernalgorithmus basierend auf den zweiten Sequenzen der Messdaten, wenn die Normwertdriftvorhersage die vorhandene Drift des maschinellen Lernalgorithmus anzeigt.

8. Computerimplementiertes Verfahren (2000) nach einem der Ansprüche 5 bis 7, ferner umfassend:
- Remodellieren des maschinellen Lernalgorithmus, wenn die tatsächliche Fehlerdriftvorhersage die Drift des vorhandenen maschinellen Lernalgorithmus anzeigt.

9. Computervorrichtung (9000), wobei die Vorrichtung (9000) einen Prozessor (9020) und einen Speicher (9030) umfasst, wobei beim Laden und Ausführen von Programmcode aus dem Speicher (9030) der Prozessor (9020) ausgebildet ist, das Verfahren (2000) nach einem der vorhergehenden Ansprüche durchzuführen.

10. Computerprogrammprodukt oder Computerprogramm oder computerlesbares Speichermedium, das Programmcode aufweist, der von mindestens einem Prozessor (9020) ausgeführt wird, wobei bei Ausführung des Programmcodes der mindestens eine Prozessor (9020) ausgebildet ist, das Verfahren (2000) nach einem der Ansprüche 1 bis 8 durchzuführen.

## Revendications

1. Un procédé (2000) mis en œuvre par ordinateur de prédiction de la dérive d'un algorithme d'apprentissage automatique déployé dans une opération de fabrication, le procédé (2000) comprenant :
- obtenir (2100) une première séquence et une deuxième séquence de données de mesure d'au moins un paramètre associé à l'opération de fabrication, dans lequel la première séquence de données de mesure a été utilisée pour entraîner l'algorithme d'apprentissage automatique et la deuxième séquence de données de mesure n'a pas été utilisée pour entraîner l'algorithme d'apprentissage automatique ;
- subdiviser (2200) chacune de la première et de la deuxième séquences des données de mesure en un sous-ensemble respectif de données de mesure conformes à la norme et en un sous-ensemble respectif de données de mesure aberrantes ;
- déterminer (2300) une mesure de similarité entre le sous-ensemble de données de mesure conformes à la norme de la première séquence et le sous-ensemble de données de mesure conformes à la norme de la deuxième séquence, et déterminer une autre mesure de similarité entre le sous-ensemble de données de mesure aberrantes de la première séquence et le sous-ensemble de données de mesure aberrantes de la deuxième séquence ; et
- déterminer (2400) une prédiction de la dérive de l'algorithme de l'apprentissage automatique sur la base de la mesure de similarité et de l'autre mesure de similarité ;
- réduire une dimension de chacun des sous-ensembles de données de mesure conformes à la norme de la première et de la deuxième séquence et des sous-ensembles de données de mesure aberrantes de la première séquence et de la deuxième séquence ;
- dans lequel l'opération de fabrication comprend une opération de fabrication d'une plaquette à circuit imprimé, et la première et la deuxième séquences comprennent des données de mesure d'au moins un paramètre associé à au moins un composant ou un exemplaire de la plaquette à circuit imprimé,
- dans lequel, lorsqu'une dérive d'un algorithme d'un apprentissage automatique est prédite ou détectée, des techniques d'adaptation de la dérive sont utilisées pour améliorer la performance de l'algorithme d'apprentissage automatique sur des données nouvelles, dans lequel par exemple comme procédé d'adaptation, on utilise ré-entraîner l'algorithme d'apprentissage automatique ou remodéliser l'algorithme d'apprentissage automatique.

2. Le procédé (2000) mis en œuvre par ordinateur de la revendication 1,
dans lequel le au moins un composant comprend au moins l'un d'un condensateur, d'une résistance, d'un transistor, et d'une inductance, et le au moins un paramètre comprend au moins l'un d'une tension, d'un courant, d'une capacité, d'une résistance, et d'une inductance.

3. Le procédé (2000) mis en œuvre par ordinateur de l'une quelconque des revendications précédentes, le procédé comprenant en outre :
- comparer chaque exemplarité de la deuxième séquence de données de mesure à un ou à plusieurs seuils définis à l'avance ;
- déterminer que la dérive de l'algorithme d'apprentissage automatique est présente, si au moins une exemplarité de la deuxième séquence de données de mesure dépasse au moins l'un des uns ou plusieurs seuils définis à l'avance.

4. Le procédé (2000) mis en œuvre par ordinateur de la revendication 3, comprenant en outre :
- arrêter l'algorithme d'apprentissage automatique ; et
- entraîner davantage l'algorithme d'apprentissage automatique sur la base de la deuxième séquence de données de mesure.

5. Le procédé (2000) mis en œuvre par ordinateur de l'une quelconque des revendications précédentes,
dans lequel prédire la dérive de l'algorithme d'apprentissage automatique comprend une prédiction de dérive de valeur suivant la norme et/ou une prédiction de dérive d'erreur réelle, et
ladite détermination de la prédiction de la dérive de l'algorithme d'apprentissage automatique comprend :
- arrêter l'algorithme d'apprentissage automatique ; et
- déterminer la prédiction de dérive de la valeur suivant la norme sur la base de la mesure de similarité ; et
- déterminer la prédiction de dérive d'erreur réelle sur la base de l'autre mesure de similarité.

6. Le procédé (2000) mis en œuvre par ordinateur de l'une quelconque des revendications précédentes, comprenant en outre :
- valider la prédiction de la dérive de l'algorithme d'apprentissage automatique en utilisant un procédé de détection de dérive fondé sur la performance.

7. Le procédé (2000) mis en œuvre par ordinateur de la revendication 5 ou 6, comprenant en outre :
- ré-entraîner l'algorithme d'apprentissage automatique sur la base de la deuxième séquence des données de mesure, si la prédiction de dérive de valeur suivant la norme indique que la dérive de l'algorithme d'apprentissage automatique est présente.

8. Le procédé (2000) mis en œuvre par ordinateur de l'une quelconque des revendications 5 à 7, comprenant en outre :
- remodéliser l'algorithme d'apprentissage automatique, si la prédiction de la dérive d'erreur réelle indique que la dérive de l'algorithme d'apprentissage automatique est présente.

9. Un dispositif (9000) informatique, le dispositif (9000) comprenant un processeur (9020) et une mémoire (9030), dans lequel après avoir chargé et exécuté un code de programme à partir de la mémoire (9030), le processeur (9020) est configuré pour effectuer le procédé (2000) suivant l'une quelconque des revendications précédentes.

10. Un produit de programme d'ordinateur ou un programme d'ordinateur ou un support de mémoire déchiffrable par ordinateur, comprenant un code de programme exécuté par au moins un processeur (9020), dans lequel par exécution du code de programme, le au moins un processeur (9020) est configuré pour effectuer le procédé (2000) suivant l'une quelconque des revendications 1 à 8.
